**Europäisches Patentamt**

**European Patent Office**

**Office européen des brevets**

(19)

(11) Veröffentlichungsnummer: **0 114 344**
**B1**

(12) ## EUROPÄISCHE PATENTSCHRIFT

(45) Veröffentlichungstag der Patentschrift:
16.03.88

(21) Anmeldenummer: **83112824.4**

(22) Anmeldetag: **20.12.83**

(51) Int. Cl.⁴: **G 11 B 15/14,** G 11 B 5/09

(54) **Wiedergabeeinrichtung für ein mit mehreren Köpfen aufgezeichnetes Digitalsignal.**

(30) Priorität: **27.12.82 DE 3248168**

(43) Veröffentlichungstag der Anmeldung:
**01.08.84 Patentblatt 84/31**

(45) Bekanntmachung des Hinweises auf die Patenterteilung:
**16.03.88 Patentblatt 88/11**

(84) Benannte Vertragsstaaten:
**AT BE CH DE FR GB IT LI LU NL SE**

(56) Entgegenhaltungen:
**EP-A-0 111 704**
**DE-A-2 820 041**
**DE-B-1 272 988**
**FR-A-2 341 995**
**GB-A-2 072 925**

**RADIO FERNSEHEN ELEKTRONIK, Band 26, Nr.
21/22, November 1977, Seite 733, Berlin, DD,
"Tonaufzeichnung mit Videospeichergeräten"**

(73) Patentinhaber: **TELEFUNKEN Fernseh und
Rundfunk GmbH, Göttinger Chaussee 76, D-3000
Hannover 91 (DE)**

(72) Erfinder: **Scholz, Werner, Dipl.- Ing., Osterstrasse
20, D-3007 Gehrden (DE)**

(74) Vertreter: **Einsel, Robert, Dipl.- Ing., TELEFUNKEN
Fernseh und Rundfunk GmbH Göttinger
Chaussee 76, D-3000 Hannover 91 (DE)**

EP 0 114 344 B1

## Beschreibung

Für die Aufzeichnung von PCM-Signalen auf Aufzeichnungsgeräten mit rotierenden Köpfen sind folgende Möglichkeiten bekannt:

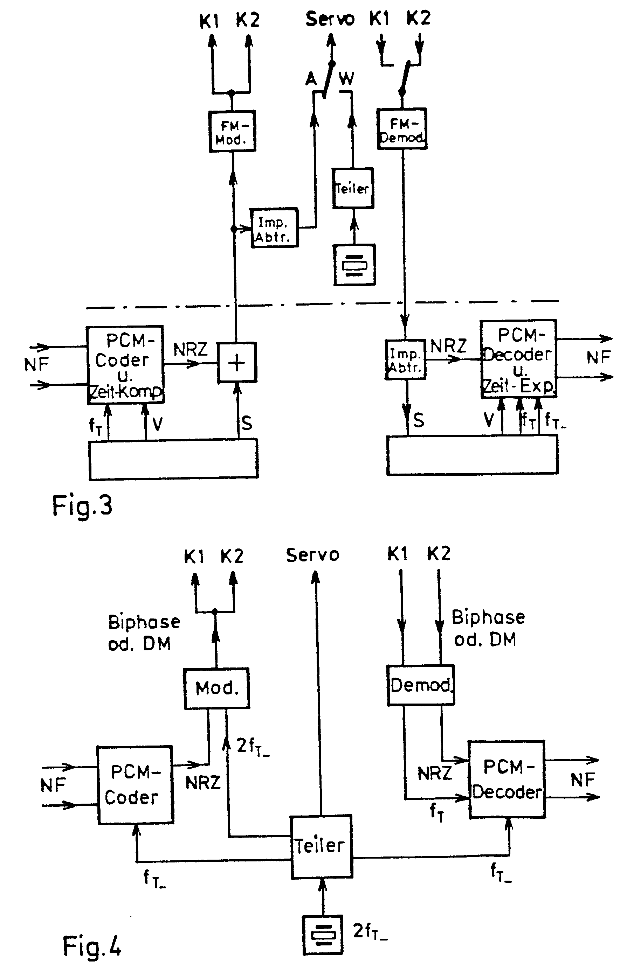

1. PCM-Adapter für Videorecorder: Ein PCM-Tonsignal wird dabei in ein Videosignal umgeformt und wie ein Videosignal aufgezeichnet (fig. 3).

2. Die für die 8 mm-Videoaufzeichnungsnorm vorgesehene Aufzeichnung eines PCM-Tonsignals auf einer durch Vergrößerung des Kopfradumschlingungswinkels erzeugten Spurverlängerung (IEEE-Transactions and Consumer Electronics, VOL. CE-28, Nr. 3, August 82, Seite 241-249).

3. Aufzeichnung eines PCM-Videosignals, bei dem pro Aufzeichnungsspur ein Datenblock vorgesehen ist, der keine wichtigen Daten enthält, so daß in diesem Block die Kopfumschaltung erfolgen kann (Professional Video Oktober 82, Seite 10, 12).

Es handelt sich also in keinem Fall um kontinuierliche PCM-Signale, wie sie z. B. von der CD (Compact Disk) abgetastet oder im PCM-Rundfuk übertragen werden. Um diese kontinuierlichen Signale nach einem der herkömmlichen PCM-Aufzeichnungsverfahren, z. B. auf einem Videorecorder, aufzuzeichnen, müssen sie erst durch Zeitkompression in Signal umgewandelt werden, das eine Zeitlücke aufweist, in der bei der Wiedergabe die Kopfumschaltung erfolgen kann.

Es gab indessen bisher keine Möglichkeit bei einem PCM-Signal, das ohne spezielle Aufbereitung für die Kopfumschaltung aufgezeichnet wurde, die fehlerfreie Wiedergabe zu ermöglichen. Dabei ist es dann nicht mehr erforderlich, daß eine Verkopplung zwischen PCM-Signal und Kopfradumdrehung vorhanden ist. Dies kann z. B. vorteilhaft sein, wenn ein PCM-Tonsignal gleichzeitig mit einem Videosignal aufgezeichnet werden soll und das PCM-Signal aus einer Quelle kommt, die nicht mit dem Videosignal verkoppelt ist. Da die Kopfradumdrehung mit dem Videosignal verkoppelt werden muß, kann dann zwischen Kopfradumdrehung und PCM-Signal keine Verkopplung vorhanden sein.

Der Erfindung liegt die Aufgabe zugrunde, bei der Wiedergabe von Digitalsignalen mit elektronischen Mitteln einen Ausgleich von Fehlern zu schaffen, die durch die Kopfumschaltung zwischen zwei Spuren, durch Bandverformungen und/oder durch verschiedene Kopfraddurchmesser entstehen.

Diese Aufgabe wird durch die in den Ansprüchen 1 und 2 beschriebene Erfindung gelöst. Vorteilhafte Weiterbildungen der Erfindung sind in den Unteransprüche 3-21 beschrieben.

In dem prioritätsälteren Teil der nicht vorveröffentlichten EP-A1 0 111 704 wird ein Videorecorder beschrieben, bei dem mit zwei rotierenden Videoköpfen auf den Schrägspuren des Magnetbandes ein modulierter Tonträger aufgezeichnet wird. Mit einem Schalter wird bei der Wiedergabe der den Tonträger führende Weg von Halbbild zur Halbbild abwechselnd auf die Ausgänge der beiden Videoköpfe umgeschaltet. Dort werden die den Eingängen des Umschalters zugeführten Tonträger vor der Umschaltung auf gleiche Phase im Umschaltzeitpunkt geregelt. Dabei handelt es sich jedoch um analoge Signale, vorzugsweise Sinusschwingungen, die durch eine analoge Regelspannung auf gleiche Phase geregelt werden. Die Verarbeitung von in nebeneinander liegenden Spuren aufgezeichneten Digitalsignalen bei der Umschaltung wird dort nicht behandelt. Die Lösungsmerkmale der vorliegenden Erfindung sind somit dort nicht vorhanden.

Die Erfindung wird im folgenden anhand der Zeichnung näher erläutert. Darin zeigen

Figur 1 die bekannte Signalaufzeichnung mit zwei Köpfen und einem Überlappungsbereich,

Figur 2 im Prinzip die durch die Kopfumschaltung bei der Wiedergabe entstehenden Fehler,

Figur 3 das Blockschaltbild für die Aufzeichnung und Wiedergabe von Tonsignalen mit Hilfe der bekannten PCM-Adapter für Videorecorder,

Figur 4 ein Blockschaltbild für die Aufzeichnung und Wiedergabe eines kontinuierlichen Digitalsignals (erfindungsgemäß),

Figur 5 ein Blockschaltbild der erfindungsgemäßen Lösung,

Figur 5.1 eine Weiterbildung der erfindungsgemäßen Lösung,

Figur 6 kurven zur Erläuterung der Wirkungsweise,

Figur 7 eine spezielle Ausbildung eines Teiles aus Figur 5,

Figur 8 Kurven zur Erläuterung der Wirkungsweise,

Figur 9 ein Ausführungsbeispiel für eine Weiterbildung der Erfindung,

Figur 10 eine spezielle Ausbildung eines Schaltungsteils aus Figur 9,

Figur 11,12 Kurven zur Erläuterung der Wirkungsweise,

Figur 13 eine Phasenangleichschaltung und

Figur 14 einige Spannungsverläufe der Phasenangleichsschaltung.

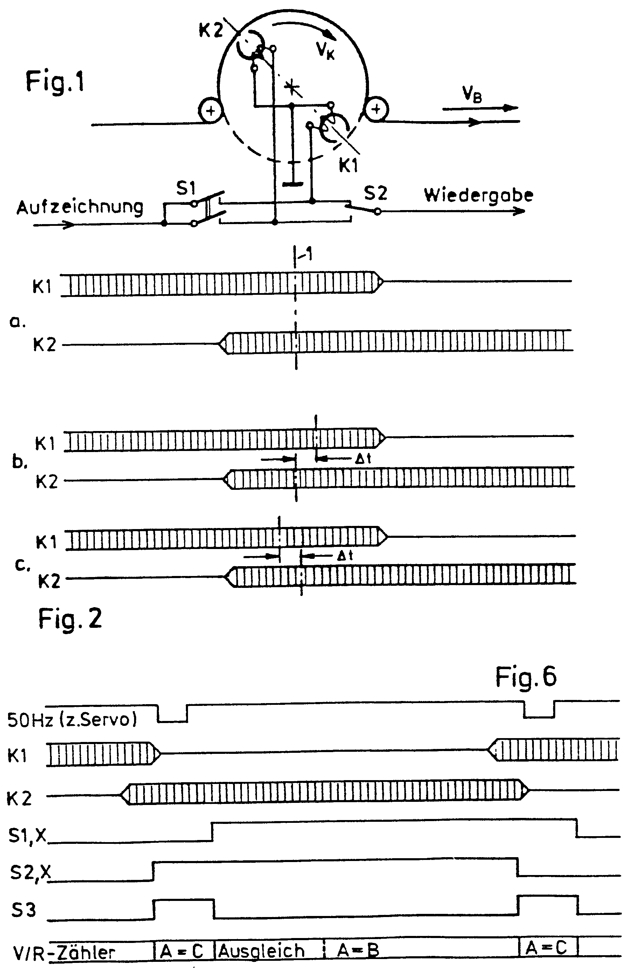

Anhand der Figuren 1,2 wird die Entstehung der Fehler im Digitalsignal während der Überlappungszeit erläutert. Bei der Aufzeichnung sind die Schalter S1 geschlossen, so daß das Signal parallel beiden Köpfen K1, K2 zugeführt wird und somit beide Köpfe gleichzeitig dasselbe Signal aufzeichnen. In Figur 2a ist ein Bit durch die strichpunktierte Linie 1 markiert. Dieses Bit hat also bei der Aufzeichnung bei beiden Köpfen K1, K2 die gleiche zeitliche Lage.

In Figur 2b wird das in Figur 2a durch die Linie 1 markierte Bit bei der Abtastung der neuen Spur mit dem Kopf K2 zu früh abgetastet, so daß bei einer Umschaltung während der Überlappungszeit eine Anzahl von Bits, die dem Zeitbereich Δ t entspricht, verlorengeht. In Figur 2c wird auf der neuen Spur durch den Kopf K2 das markierte Bit zu spät abgetastet, so daß hier eine Signalwiederholung auftritt. Diese zeitlichen Überlappungsfehler Δ t entstehen dadurch, daß der Weg der Köpfe K bei der Wiedergabe im Regelfall mit der aufgezeichneten Spurlänge nicht übereinstimmt. Abweichungen entstehen sowohl durch plastische Bandverformungen als auch durch Temperaturunterschiede zwischen Aufnahme und Wiedergabe. Beim Austausch der Bänder können die Überlappungsfehler durch Abweichungen des Kopfraddurchmessers oder des Bandzuges noch größer werden.

Bei Videorecordern erfolgt mit dem Schalter S2 jeweils die Umschaltung auf den neuen Kopf und die neu abgetastete Spur. Bei einem Videosignal ist das auch zulässig, da der Zeilenoszillator bei nicht zu großer Zeitkonstante der Regelschaltung dem für die Zeilenperiode kleinen Phasensprung folgt.

Bei kontinuierlichen PCM-Signalen, wie sie z. B. bei Digital-Platten oder im Digital-Rundfunk verwendet werden, ist ein derartiger Phasensprung untragbar. Es müßte jeweils eine neue Blocksynchronisierung erfolgen. Während dieser Zeit wäre aber der Kanaldecoder nicht arbeitsfähig.

Bei bekannten PCM-Adpatern für Videorecorder wird das PCM-Signal zwischen den Kopfwechseln zeitlich komprimiert, so daß im Kopfwechselbereich kein Nutzsignal übertragen wird.

Figur 3 zeigt das Blockschaltbild für eine derartige Anordnung. Bevor das Signal dem Eingang des Videorecorders zugeführt wird, werden die Synchronimpulse S zugesetzt. In den Austastzeiten wird kein PCM-Signal übertragen. Die Aufzeichnung erfolgt mit der normalen FM.

Bei der Wiedergabe wird durch die Umschaltung zwischen den Köpfen K1, K2 für ein ununterbrochenes Signal am Eingang des FM-Demodulators gesorgt. Nach Impulsabtrennung wird das PCM-Signal dem PCM-Decoder zugeführt, wo auch die Zeitkompression rückgängig gemacht wird. Die für den Decoder erforderlichen Taktspannungen werden mit Hilfe des Synchronsignals gewonnen.

Die Verwendung eines digitalen Übertragungscodes (z. B. DM oder Biphase) statt der Frequenzmodulation gemäß Figur 3 spart Bandbreite und ermöglicht eine sichere Wiederherstellung der für die Decodierung erforderlichen Taktfrequenz. Dies ist ein für die Übertragungssicherheit besonders wichtiger Punkt.

Figur 4 zeigt eine Aufzeichnungs- und Wiedergabeeinrichtung eines Recorders mit zwei rotierenden Köpfen K1, K2. Innerhalb der Demodulatorschaltung, der die Abtastsignale der beiden Köpfe getrennt zugeführt werden, werden die durch den Kopfwechsel an sich auftretenden Fehler ausgeglichen. Dann brauchen sich die übrigen Schaltungsteile nicht von den Aufzeichnungseinrichtungen für eine kontinuierliche Spur wie z. B. bei einer Digitalplatte zu unterscheiden. Bei der Schaltung nach Figur 4 soll erreicht werden, daß die Demodulatorschaltung die vollständige Bitfolge und das vollständige dazugehörige Taktsignal liefert und kein Bit doppelt vorhanden ist oder fehlt.

Diese Aufgabe läßt sich an sich durch Pufferspeicher lösen, wenn die Überlappungsfehler im Mittel null sind. Die Überlegungen anhand von Figur 2 zeigen jedoch, daß die durch Abweichungen zwischen Kopfweg und Spurlänge hervorgerufenen Überlappungsfehler ständig gleiches Vorzeichen haben. Es werden ständig gemäß Figur 2b zu wenig Bits oder gemäß Figur 2c zu viel Bits abgetastet. Dieses kann ein bekannter Pufferspeicher nicht bewältigen. Die PLL-Phasenregelschaltung, die aus dem Übertragungscode den Bittakt herstellt, liefert dann im Fall gemäß Figur 2b ständig weniger Taktimpulse, als der Quarzoszillatorfrequenz entspricht, mit dem die Drehzahl des Kopfrades verkoppelt ist. Im Fall gemäß Figur 2c liefert die PLL-Schaltung ständig zuviele Taktimpulse. Der Quarzoszillator in Figur 4 liefert auch den Takt für den D/A-Wandler des PCM-Decoders.

Bei Wiedergabeschaltungen mit Zeitfehlerbeseitigung, die z. B. für Tonsignale verwendet werden, ist zum Einlesen der einzelnen Bits in die Speicher des PCM-Decoders der aus dem Signal regenerierte Takt erforderlich, der den Zeitschwankungen des Signals folgt. Das Auslesen erfolgt mit einem konstanten Takt. Um ein Überlaufen der Speicher zu vermeiden, müssen beide Taktfrequenzen im Mittel übereinstimmen. Außerdem wird nicht nur die Speicherplatzadressierung, sondern es werden auch alle anderen Vorgänge im PCM-Decoder durch Zählschaltungen gesteuert.

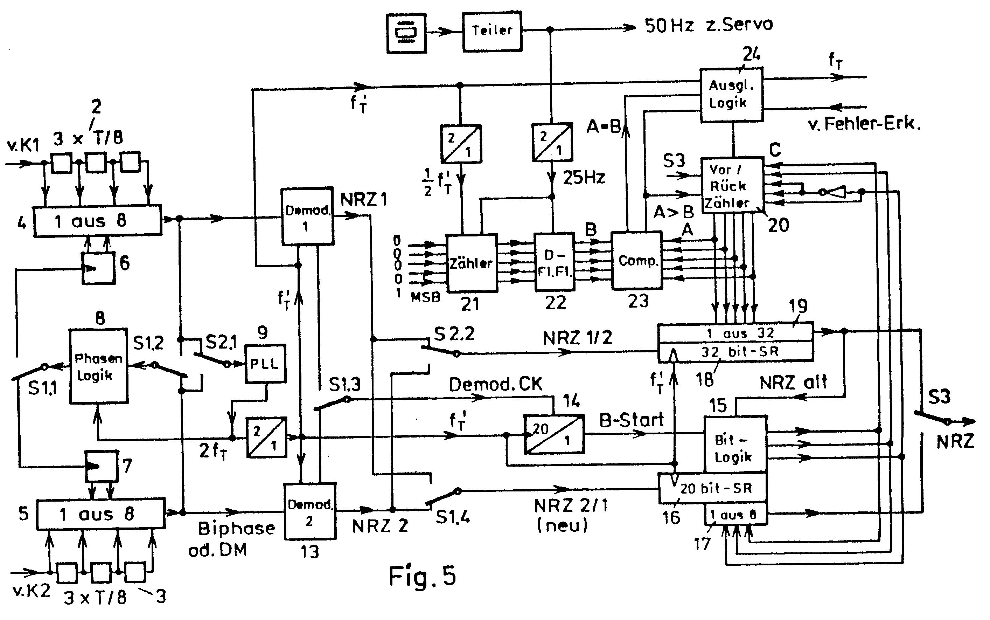

Figur 5 zeigt eine digitale Schaltung, die für den Demodulator in Figur 4 verwendet werden kann. Die genannten Maßnahmen können aber auch völlig im Bereich des Leitungscodes, d.h. vor dem eigentlichen Demodulator durchgeführt werden.

Die Schaltung nach Figur 5 ist für ein Biphase- oder ein DM-Signal geeignet. Das Ausgangssignal jedes Kopfes K1, K2 wird jeweils einer Verzögerungsschaltung 2,3 mit vier Abgriffen zugeführt. Der Unterschied der Verzögerungen zwischen den Abgriffen beträgt jeweils T/8, wobei T die Dauer einer Bitperiode ist. Die vier zur Verfügung gestellten Signalphasen sind also gleichmäßig über eine Periode der doppelten Taktfrequenz 2fT verteilt. Jede Verzögerungsschaltung besitzt eine Auswahlschaltung 4,5, deren Ausgang entsprechend der an den Dateneingängen angelegten Binärzahl auf einen der Ausgänge der Verzögerungsschaltung 2,3 schaltbar ist. Die Binärzahl wird jewils von einem 2-Bit-Zähler 6,7 geliefert. Der Zähler 7 des mit einer neuen Spur

beginnenden Kopfes K2 erhält Zählimpulse von der Phasenlogik 8, solange die Signalphase nicht in ausreichender Weise an die Phase der PLL-Schwingung 2fT angeglichen ist. Die PLL-Schaltung 9 wird zu dieser Zeit noch vom Signal der alten Spur, also vom Kopf K1, phasensynchronisiert.

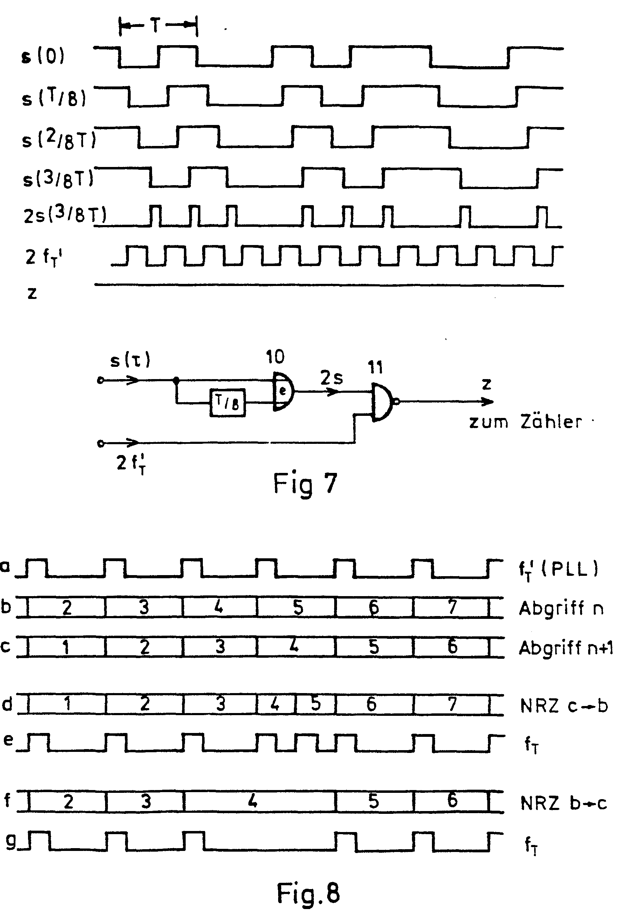

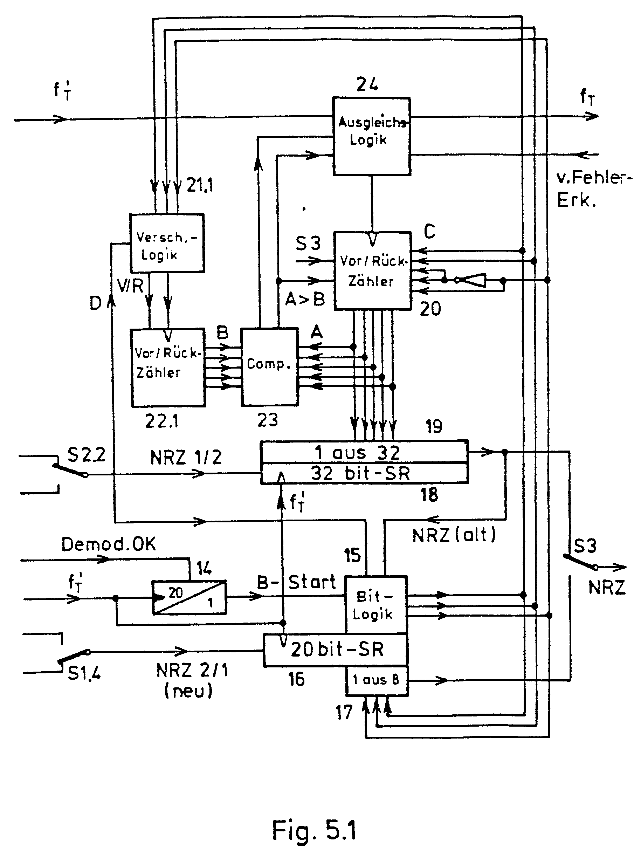

Figur 7 zeigt ein Beispiel für die Phasenlogik 8 in Figur 5. Das EXOR-Gatter 10 erzeugt bei jeder Signalflanke einen positiven Impuls, dessen Dauer etwa T/8 beträgt. Je nach Phasenlage dieser Impulse gegenüber der 2fT-Schwingung werden am Ausgang des AND-Gatters 11 Impulse auftreten oder nicht. Sobald keine Impulse mehr auftreten, ist eine ausreichende Phasenangleichung vollzogen. Die Phase der PLL-Schwingung 2fT, die der Phasenlogik 8 zugeführt wird, ist entsprechend eingestellt.

Nach dieser Phasenangleichung des neuen Signale ist der diesem Signal zugeordnete Demodulator 12 oder 13 in der Lage, mit Hilfe des eigentlichen Signaltaktes fT eine korrekte Erzeugung des NRZ-Signals durchzuführen. Zum Zwecke der Demodulation muß entschieden werden, ob innerhalb des Demodulators 12 oder 13 das Eingangssignal um eine weitere halbe Taktperiode verschoben werden muß oder nicht. Diese 180° -Entscheidung erfolgt mit Hilfe einer Identifikationsschaltung. Damit ist sichergestellt, daß das NRZ-Signal der neuen Spur am Demodulatorausgang mit im Vergleich zum alten Signal phasengleichen Bittakt zur Verfügung steht. Dabei können aber die Bits der beiden Signale um eine ganze Zahl von Bittakten gegeneinander verschoben sein.

Den Vollzug der 180° -Entscheidung meldet der Demodulator 12, 13 über den Umschalter S1.3 dem Zähler 14, der 20 Bittakte zählt. Nach Ablauf dieser 20 Bittakte wird die Bitlogik 15 gestartet. Die Bitlogik 15 vergleicht die Signale an den letzten acht Stufen des 20-Bit-Schieberegisters 16 mit dem NRZ-Signal der alten Spur, das zur Zeit noch über den Umschalter S3 auf den Ausgang der Demodulatorschaltung durchgeschaltet ist. Die Verzögerung um 20 Bittakte ist notwendig, damit bei Beginn der Bitangleichung das Schieberegister 16 bis zur letzten Stufe mit dem richtig demodulierten NRZ-Signal gefüllt ist. Nach Ablauf von z. B. weiteren 16 Bitperioden liefert die Bitlogik 15 eine 3-Bit-Binärzahl, die angibt, an welchem Abgriff des 20-Bit-Schieberegisters 16 Signalübereinstimmung mit dem durchgeschalteten NRZ-Signal der alten Spur besteht. Dieser Abgriff wird dann über die Auswahlschaltung 17 auf den zweiten Eingang des Umschalters S3 gegeben. Dann kann der Schalter S3 zwischen zwei Bitperioden vom alten NRZ-Signal auf das neue NRZ-Signal umschalten, ohne daß dadurch eine Störung des nachfolgenden Kanaldecoders entsteht, spätestens zu diesem Zeitpunkt muß auch der schalter S2.1 auf das Signal der neuen Spur geschaltet werden, damit die PLL nun vom Signal der neuen Spur phasensynchronisiert wird.

Gleichzeitig wird der Eingang des 32-Bit-Schieberegisters 18 über den Schalter S2.2 auf das neue NRZ-Signal geschaltet. Jeder Abgriff des Schieberegisters 18 kann über eine Auswahlschaltung 19 auf den ersten Eingang des Schalters S3 gegeben werden. Die fünf Dateneingänge der Auswahlschaltung 19 sind an die fünf Ausgänge eines 5-Bit-Vor/Rückzählers 20 angeschlossen. Der Zähler 20 kann von der Bitlogik 15 auf einen der acht Ausgangswerte 12-19 eingestellt werden. Mit dem Steuersignal für den Schalter S3 wird der Vor/Rück-Zähler auf die Zahl eingestellt, die dem zur Zeit verwendeten Abgriff des 20-Bit-Schieberegisters 16 entspricht. Damit wird die Auswahlschaltung des 32-Bit-Schieberegisters auf den gleichwertigen Abgriff des 32-Bit-Schieberegisters eingestellt. Frühestens 20 Taktperioden nach dem Schalten des Schalters S2.2 auf das neue Signal kann der Schalter S3 wieder auf den Ausgang der Auswahlschaltung 19 geschaltet werden. Diese Umschaltung sollte jedoch frühestens dann erfolgen, wenn von der alten Spur kein Signal mehr abgetastet wird, so daß gleichzeitig die Schalter S1.1, S1.2 und S1.3 auf den zu dieser Zeit signalfreien Kopf K geschaltet werden können. Das Zurückschalten des Schalters S3 auf den Ausgang der Auswahlschaltung 19 wird ebenfalls zwischen 2 Bitperioden durchgeführt, so daß der nachfolgende Kanaldecoder dadurch nicht gestört wird.

Figur 6 zeigt den zeitlichen Zusammenhang zwischen den Signalen der Kopfe K1, K2 und den Steuerspannungen für die verschiedenen Umschalter S. Der Wert null der Steuerspannungen entspricht der in Figur 5 gezeichneten Schalterstellung.

Die Schaltung nach Figur 5 enthält einen weiteren 5-Bit-Zähler 21. Die Aufgabe dieses Zählers besteht darin, zu zählen, wieviel Taktimpulse von der PLL-schaltung 9 zwischen zwei Kopfwechseln im Mittel geliefert werden. Wenn z. B. der Betrag des Überlappungsfehlers immer $<$ 16 Bit ist, dann interessieren nur die fünf LSB's des Zählergebnisses, so daß für die Zählung ein 5-Bit-Zähler ausreicht, obwohl z. B. bei einer Bitrate von 2Mbits/s zwischen zwei Kopfwechseln 40.000 Bittakte liegen. Dieses wäre die Sollzahl der Takte und ein Zeichen dafür, daß kein Überlappungsfehler vorliegt. Für die über die Kopfwechsel gemittelte Zählung muß die Zähldauer verdoppelt und die dem 5-Bit-Zähler 21 zugeführte Frequenz durch 2 geteilt werden.

Wenn die Sollzahl von Taktimpulsen vorhanden ist, wird die Auswahlschaltung auf die Mitte des 32-Bit-Schieberegisters eingestellt. Da 40.000 durch 32 ohne Rest teilbar ist, muß der 5-Bit-Zähler mit der Vorderflanke jedes zweiten 50-Hz-Impulses auf den Wert 16 (binär: 10.000) eingestellt werden. Mit derselben Impulsflanke wird das Ergebnis der vorhergehenden Zählung in fünf D-Flip-Flops 22 übernommen. Dieses Zählergebnis ist ein Maß für den gerade vorhandenen mittleren Überlappungsfehler. Ist das Zählergebnis 16, ist kein Überlappungsfehler

vorhanden. Im Fall gemäß Figur 2b wird das Ergebnis < 16 sein. Im Fall gemäß Figur 2c wird es > 16 sein.

Die in den fünf D-Flip-Flops 22 gespeicherte Zahl gibt die Grundverschiebung an, die mit dem 32-Bit-Schieberegister 18 einzustellen ist, damit beim nächsten Kopfwechsel das neue Signal möglichst von der Mitte des Auswahlbereiches der Bitlogik 15 abgenommen werden kann. Auf diese Weise ist es ausreichend, wenn für die Bitlogik 15 ein Auswahlbereich von z. B. 8 Bits vorgesehen ist, während die Überlappungsfehler hier maximal ± 20 Bits betragen dürfen.

Die Einstellung der Grundverschiebung gemäß Figur 5 eignet sich für eine Wiedergabeschaltung gemäß Figur 4, bei der die Anzahl der Bittakte je Kopfradumdrehung von der Aufnahme her bekannt ist und bei der Wiedergabe eine Verkopplung zwischen dem aus einem Quarzoszillator gelieferten Soll-Bittakt und der Kopfradumdrehung vorhanden ist.

Figur 5.1 zeigt ein anderes Prinzip für die Einstellung der Grundverschiebung, bei dem eine Verkopplung zwischen PCM-Takt und Kopfradumdrehung bei der Aufzeichnung nicht erforderlich ist. Die Grundverschiebung ist hier in einem weiteren Vor/Rück-Zähler 22.1 abgespeichert. Die Verschiebelogik 21.2 überprüft die von der Bitlogik gelieferte Binärzahl. Über- oder unterschreitet der Wert dieser Binärzahl einen vorgegebenen mittleren Zahlenbereich, dann bewirkt die Verschiebelogik, daß der Stand des Vor/Rück-Zählers 22.1 um eine Einheit vermindert oder erhöht wird. Da sprunghafte Änderungen der Grundverschiebung nicht vorkommen, sorgt diese Schaltung ständig dafür, daß der Auswahlbereich der Bitlogik nicht überschritten wird. Damit sich der Vor/Rück-Zähler 22.1 nach dem Einschalten auf den richtigen Bereich der Grundverschiebung einstellt, kann folgendes Verfahren angewendet werden:

Solange der Bereich noch nicht erreicht ist, findet die Bitlogik keine Signalübereinstimmung zwischen den Signalen im Überlappungsbereich. Dies wird durch das Signal D angezeigt, das bewirkt, daß der Vor/Rück-Zähler jeweils in der gleichen Richtung um eins weiterzählt. Auf diese Weise muß der Auswahlbereich der Bitlogik spätestens nach 24 Kopfwechseln erreicht sein.

Nachdem der Schalter S3 wieder auf den Ausgang der Auswahlschaltung 19 geschaltet ist, kann die Ausgleichslogik in Aktion treten. Deren Aufgabe ist es, die an der Sollzahl fehlenden Bittakte zu ergänzen oder überzählige Bittakte zu entfernen. Gleichzeitig wird damit die für den nächsten Kopfwechsel erforderliche Grundverschiebung hergestellt. Außerdem wird das Überlaufen der für den Ausgleich der stets mit gleichen Vorzeichen auftretenden Überlappungsfehler verwendeten Schieberegister verhindert.

Figur 8 zeigt die Wirkungsweise der Ausgleichslogik anhand von Diagrammen. In Figur 8a ist die aus der PLL-Schaltung gewonnene Taktspannung fT' dargestellt, mit der die Bits durch die Schieberegister geschoben werden. Figur 8b und c zeigen numerierte Bits, die an zwei benachbarten Abgriffen des 32-Bit-Schieberegisters stehen.

Figur 8d und e zeigen den Fall, bei dem infolge des Überlappungsfehlers bei einfacher Spurumschaltung Bits verlorengehen würden, gemäß Figur 2b. Die Umschaltung wurde hier jedoch, wie beschrieben, ohne Bitverlust vollzogen. Das Ersetzen der fehlenden Bits kann dann irgendwann vor dem nächsten Kopfwechsel auf folgende Weise erfolgen: Es sei angenommen, daß am Ausgang der Auswahlschaltung 19 das Signal gemäß Figur 8c vom Abgriff n + 1 des Schieberegisters 18 steht.

Der Komparator 23, der den Stand des Vor/Rück-Zählers A mit dem Inhalt B des Speichers 22, 22.1 vergleicht, stellt fest, daß A > B ist. Das beruht darauf, daß zu wenig Bits zwischen zwei Kopfumschaltungen übertragen werden. Das signal (A > B) = 1 bewirkt, daß der Vor/Rück-Zähler 20 auf Rückwärtszählen eingestellt und ein Impuls in der Mitte von zwei Impulsen fT' erzeugt wird. Dieser Impuls wird gemäß Figur 8e dem Signal fT zugesetzt. Gleichzeitig wird er auf den Zähleingang des Vor/Rück-Zählers 20 gegeben. Mit der Vorderflanke des Impulses wird der Ausgang der Auswahlschaltung auf den nächst tieferen Abgriff n des Schieberegisters 18 geschaltet. Figur 8d zeigt das Signal am Ausgang der Auswahlschaltung. Es ist ersichtlich, daß - bis auf die Verdoppelung der Bitrate das NRZ-signal und der zugehörige Takt korrekt bleiben. Es kann dafür gesorgt werden, daß diese Ausgleichsvorgänge dort erfolgen, wo keine Datenbits in Speicher eingelesen werden müssen, z. B. während der Übertragung des Bitmusters für die Blocksynchronisierung. Dadurch läßt sich vermeiden, daß die Speicher des Kanaldecoders für die erhöhte Bitrate ausgelegt werden müssen. Für die Zählschaltungen des Kanaldecoders bringt die zeitweise verdoppelte Taktfrequenz keine Nachteile. Man kann z. B. einen Ausgleichsvorgang für ein Bit dann ausführen, wenn die Fehlererkennungsschaltung einen fehlerfreien Block meldet. Zur Verarbeitung eines derartigen Blocks sind die wenigsten Takte erforderlich.

Figur 8f und g zeigen, in welcher Weise die einzelnen Bit-Ausgleichsvorgänge erfolgen müssen, wenn zwischen zwei Kopfwechseln zu viele Bittakte (B > A) übertragen werden, wie dies in Figur 2c dargestellt ist. Der Komparator 23 gibt dann das Signal (A > B) = 0 ab. Der Vor/Rück-Zähler 20 ist damit auf Vorwärtszählen eingestellt. Sobalb von der Ausgleichslogik 24 ein Impuls fT auf den Zähleingang des Zählers 20 gegeben wird, schaltet die Auswahlschaltung vom Abgriff n auf den Abgriff n + 1 des Schieberegisters 18. Im Taktsignal fT' wird der betreffende Impuls ausgetastet. Das Ergebnis daraus zeigt Figur 8f,g. Auch dieser Ausgleichsvorgang dürfte in einem digital arbeitenden Kanaldecoder keine Störung verursachen.

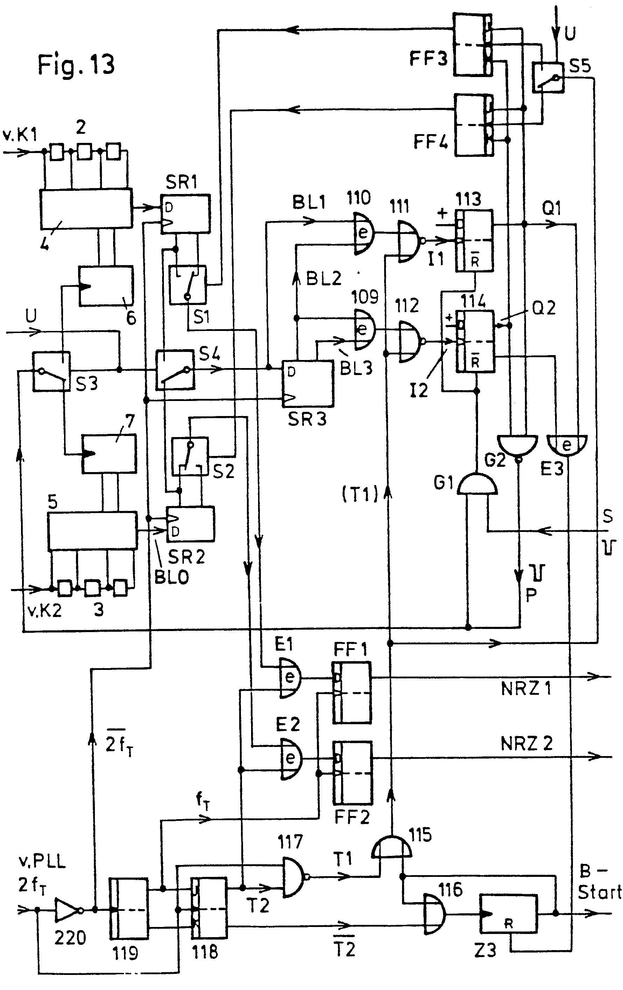

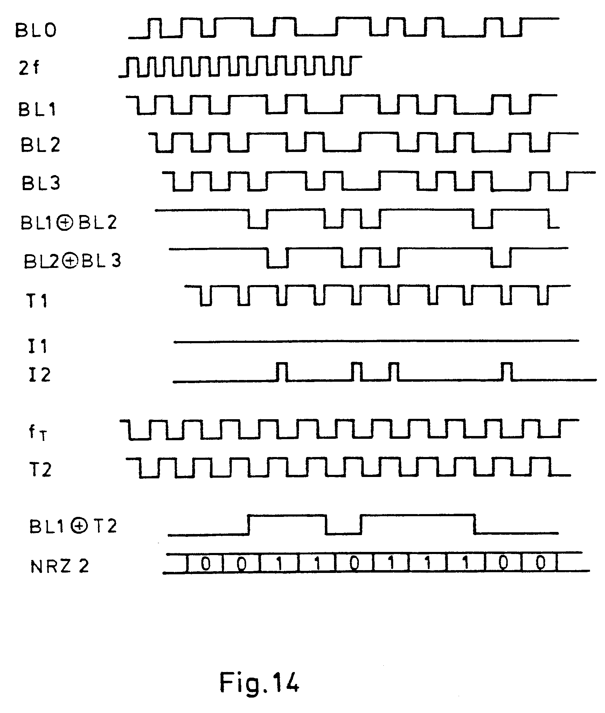

Wie aus der Beschreibung von Figur 5 zu entnehmen ist, ist für die störungsfreie Umschaltung des Signals der beiden Köpfe im Überlappungsbereich eine Phasenangleichung der Signale erforderlich. Dort ist ein Schaltungsprinzip beschrieben wie es gleichermaßen für ein Biphase-Signal als auch für ein DM-Signal anwendbar ist. Figur 13 zeigt eine Phasenangleichschaltung, wie sie insbesondere für die Verarbeitung eines Biphase-Level-signals BL vorteilhaft ist. Figur 14 zeigt einige Spannungsverläufe innerhalb dieser Schaltung.

In dieser Schaltung wird die Phasenlogik durch sowieso für die Demodulatorschaltung erforderliche Schaltungsteile ersetzt. Als Kriterium für die richtige Phaseneinstellung dient die fehlerfreie Arbeitsweise der Demodulatorschaltung über einen vorgegebenen Zeitraum. Wenn dieser Zeitraum auf $\geqslant 20$ Bitperioden festgelegt wird, kann der Zähler 14 gemäß Figur 5 entfallen. Nach Ablauf der $\geqslant 20$ fehlerfreien Bitperioden steht nämlich nicht nur fest, daß die Phasenangleichung genügend genau ist, sondern auch, daß das Schiebe register der Bitvergleichsschaltung 16 in Figur 5 mit dem korrekt demodulierten Signal geladen ist. Phasenangleichung, Einstellung der Demodulatorschaltung und Startverzögerung für die Bitlogik arbeiten also nicht nacheinander, sondern gleichzeitig. Durch die Zeitersparnis können bei Signalstörungen im Überlappungsbereich mehr Versuche zwecks Erzielung einer fehlerfreien Signalumschaltung durchgeführt werden. Dadurch wird die Wahrscheinlichkeit für fehlerhafte Umschaltungen herabgesetzt.

Die eigentliche Phasenangleichung der Bittakte der jeweils neuen Spur an die ohne Phasensprung durchgehende Taktschwingung der PLL erfolgt hier wie bei Figur 5 durch Auswahl bestimmter Verzögerungsstufen für die von den Köpfen kommenden Biphase-Signale. Dafür dienen auch hier die Schaltungsteile 2,4,6 bzw. 3,5,7. Später wird noch gezeigt, daß die Phasenangleichung zwischen Bittakt und durchschwingenden PLL-Takt auch durch Phasenverschiebung der Taktschwingung herbeigeführt werden kann.

Die im folgenden beschriebene Demodulatorschaltung die gleichzeitig den Phasenangleichsvorgang steuert, ist für beide Arten der Phasenangleichung geeignet.

Die in Figur 13 gezeigten Stellungen der Schalter S3,S4,S5 entsprechen dem Beginn der Überlappungszeit beim Kopfwechsel von Kopf 1 auf Kopf 2. Das am Ausgang der Auswahlschaltung anliegende Signal BLO der neuen spur von Kopf K2 wird einem Dateneingang eines ersten 2-Bit-Schieberegisters SR2 zugeführt. Das Einlesen erfolgt mit der mit Hilfe einer PLL-Schaltung aus dem Signal der alten Spur gewonnenen doppelten Taktfrequenz 2fT. Das Schieberegister SR2 liefert das Biphase-Signal mit zwei verschiedenen zeitlichen Lagen, die sich um eine halbe Bitperiode unterscheiden. Jeweils eins dieser Signale wird über einen Umschalter S2 dem eigentlichen Demodulator zugeführt, der aus einem EX-OR-Gatter E2 und einem Flip-Flop FF2 besteht. Am anderen Eingang des EX-OR-Gatters E2 liegt ein Takt T2 an. Das Flip-Flop FF2 wird durch die Taktfrequenz fT der alten Spur von Kopf K1 getaktet. Wie aus Figur 14 zu ersehen, sind fT und T2 um eine viertel Bitperiode gegeneinander verschoben. Dieser Demodulator liefert nur dann ein richtiges NRZ-Signal, wenn mit Hilfe des Zählers 7 und des Schalters S2 die richtige Phase gegenüber der Taktfrequenz fT der alten Spur eingestellt worden ist.

Für die Einstellung des Schalters S2 und des Zählers 7 sorgt hier eine Identifikationsschaltung. Ein Ausgang des Schieberegisters SR2 wird über einen Schalter S4 mit dem D-Eingang eines weiteren 2-Bit-Schieberegisters SR3 verbunden. Mit Hilfe dieses Schieberegisters SR3 werden drei Signale BL1, BL2, BL3 erzeugt, die sich jeweils in ihrer zeitlichen Lage um eine halbe Bitperiode unterscheiden. Das signal BL1 führt auf einen Eingang eines EX-OR-Gatters 110, das Signal BL2 auf einen weiteren Eingang des EX-OR-Gatters 110 und einen Eingang eines EX-OR-Gatters 109, und das Signal BL3 auf einen weiteren Eingang des EX-OR-Gatters 109. Die Ausgangsspannungen der beiden EX-OR-Gatter 109,110 werden mit Hilfe von zwei NOR-Gattern 111,112 mit einer Impulsspannung T1 verglichen. Die Spannungsverläufe für den Fall einer korrekten Phaseneinstellung des Signals BLO sind in Figur 14 dargestellt. Die Ausgangssignale I1 und I2 der NOR-Gatter 111, 112 bilden die eigentliche Phasenidentifikation. Die Phase von BLO ist dann richtig, wenn eines der beiden Signale I1, I2 auf logisch "0" bleibt. Die Stellung des Schalters S2 hängt davon ab, welches der beiden Signale aus Impulsen besteht.

Um sicher zu gehen, daß das Auffinden der korrekten Phaseneinstellung nicht zufällig durch eine Störung vorgetäuscht wurde, muß über eine längere Zeit beobachtet werden, ob eines der beiden Signale auf logisch "0" bleibt. Dies geschieht mit einem Zähler Z3, der zählt, ob dieser Zustand über eine bestimmte Anzahl von Bitperioden bestehen bleibt. Diese Anzahl kann der Länge des Schieberegisters entsprechen, das in der Bitlogik verwendet wird. Damit wird die Wartezeit, die dort erforderlich ist, um zu Beginn des Bitangleichsvorgangs das dabei verwendete Schieberegister völlig mit dem korrekten NRZ-Signal zu füllen, sinnvoll ausgenutzt.

Ein Phaseneinstellvorgang läuft nun folgendermaßen ab:

Zu Beginn der Überlappungszeit werden zwei D-Flip-Flops 113, 114, deren Takteingänge die Spannung I1 und I2, im folgenden I-Impulse genannt, zugeführt sind, durch einen Startimpuls S zurückgesetzt. Ein Ausgang Q1 des Flip-Flops 113 liegt sowohl an einem Eingang eines EX-OR-Gatters E3 als auch an je einem J-Eingang von Flip-Flops FF3 und FF4 an. Der zweite Eingang des EX-OR-Gatters E3 ist mit dem invertierenden Ausgang des Flip-Flops 114 verbunden. Der nichtinvertierende Ausgang Q2 des Flip-Flops 114 ist sowohl mit einem NAND-Gatter G2, als auch mit den K-Eingängen der Flip-Flops FF3 und FF4 verbunden. Der Ausgang des NAND-Gatters G2 führt sowohl auf einen Eingang eines NANG-Gatters G1 als auch über einen Schalter S3 auf den Takt-Eingang des Zählers 7 bzw. bei anderer Schalterstellung des Schalters S3 auf den Takt-Eingang des Zählers 6. Der Ausgang des EX-OR-Gatters E3 führt auf den Reset-Eingang eines Zählers Z3. Die Ausgänge der Gatter G2 und E3 sind zunächst logisch "1". Der Zähler Z3 wird im rückgesetzten Zustand gehalten.

Beim ersten Impuls I1 bzw. I2, der auftritt, wird der Q-Ausgang des entsprechenden D-Flip-Flops 113 bzw. 114 logisch "1". Der Zähler Z3 wird zum Zählen freigegeben. Sobald innerhalb der Zählzeit des Zählers Z3 auch am Takteingang des anderen D-Flip-Flops ein I-Impuls auftritt, wird der Zähler Z3 über das EX-OR-Gatter E3 wieder zurückgesetzt. Das NAND-Gatter G2 liefert eine abfallende Impulsflanke P an dem Zähler 7. Damit wird die Auswahlschaltung auf den nächsten Abgriff der Verzögerungskette 3 geschaltet. Wenn auch bei diesem Abgriff an den Eingängen der D-Flip-Flops 113, 114 I-Impulse auftreten, wiederholt sich der Vorgang. Das geht solange, bis während der Zählzeit vom Zähler Z3 nur an einem der D-Flip-Flops 113,114 I-Impulse auftreten. Der Zähler Z3 liefert dann eine ansteigende Impulsflanke, die zunächst dafür sorgt, daß keine weiteren I-Impulse entstehen können. Dazu ist der Ausgang des Zählers Z3 über ein OR-Gatter 115 mit je einem Eingang der OR-Gatter 111, 112 verbunden. Außerdem kann zu diesem Zeitpunkt die Bitlogik entsprechend Figur 5 gestartet werden. Die Stellung der beiden D-Flip-Flops 113,114 wurde bereits zu Beginn eines jeden Zählzyklus vom Zähler Z3 auf eines der Flip-Flops FF3 bzw. FF4 übertragen. Für die Auswertung der Signale von Kopf 2 wird der Einlesetakt über den Schalter S5 dem Flip-Flop FF4 zugeführt. Damit ist über den Schalter S2 der richtige Abgriff vom Schieberegister SR2 ausgewählt, so daß während der gesamten Zählzeit am Ausgang des Flip-Flops FF2 das richtige NRZ-Signal anliegt. Die Einstellung des Zählers 7 und des Schalters S2 bleibt mindestens bis zum Abschluß des Umschaltvorgangs beim nächsten Kopfwechsel erhalten. Der Umschaltvorgang von Kopf 2 auf Kopf 1 läuft in völlig entsprechender Weise ab.

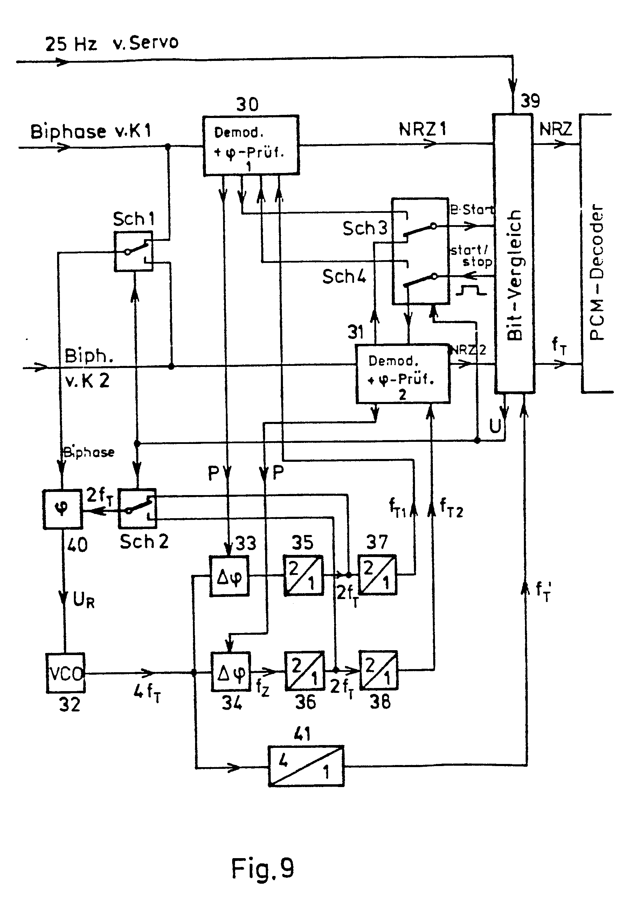

Figur 9 zeigt ein Ausführungsbeispiel gemäß einer Weiterbildung der Erfindung. Die Phasenangleichung der Bittakte erfolgt hier in der Weise, daß zu Beginn jeder neuen Spur die Phase der Taktschwingung am Ausgang eines Frequenzteilers so eingestellt wird, daß sie für die einwandfreie Demodulation des PCM-Signals (Biphase-Signal) der neuen Spur geeignet ist.

Die Taktschwingungen werden hier in ihrer Phase den von den Köpfen K1,K2 kommenden Signalen angepaßt. Die Ausgangssignale der den Köpfen K1,K2 zugeordneten Demodulationsschaltungen (NRZ1 und NRZ2) besitzen hier allerdings nicht mehr die gleiche Taktphase. Diese Phasenverschiebung kann jedoch leicht beim Einlesen der beiden NRZ-Signale in die Schieberegister der Bit-Vergleichsschaltung mit der Taktschwingung fT', die ohne Phasensprünge über die Kopfwechsel hinweg durchschwingt, beseitigt werden.

In Figur 9 kommt ein Biphase-Signal mit der Bitrate fT abwechselnd von den beiden Köpfen K1,K2 eines Videorecorders.

Die beiden Signale werden direkt dem Eingang je einer Demodulationsschaltung 30,31 zugeführt. In den Demodulationsschaltungen 30,31 erfolgt gleichzeitig die Phasenprüfung bei Beginn jeder neuen Spur. Über den Schalter Sch1 kann jeweils einer der beiden Signaleingänge mit dem ersten Eingang einer Phasenvergleichsschaltung 40 verbunden werden. Die Phasenvergleichsschaltung 40 ist Bestandteil einer PLL-Schaltung, die außerdem folgende Teile enthält:

1. Einen VCO-Oszillator 32, der auf einer Frequenz von f0 = 4.fT schwingt.

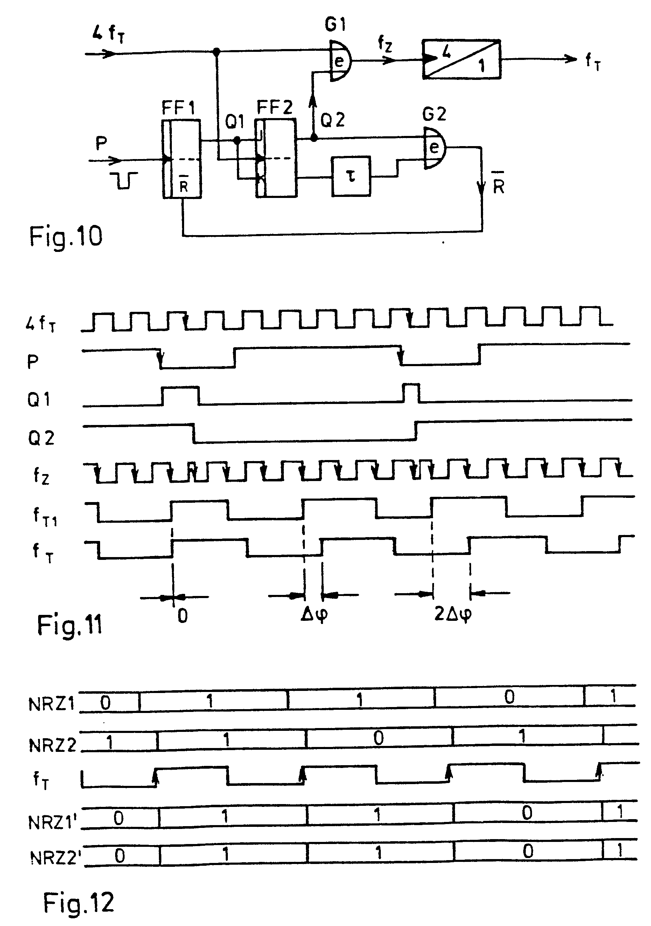

2. Zwei Schaltungen 33,34 zur Erzeugung von Phasensprüngen $\Delta \varphi$ = 1/8 fT-Periode. Diese Schaltungen werden anhand der Figuren 10,11 erläutert.

3. Zwei weitere Frequenzteiler 35,36 mit dem Teilerverhältnis 1 : 2.

4. Einen Umschalter Sch2, der die Ausgangssignale der Frequenzteiler 35,36 mit der Frequenz 2fT wahlweise dem zweiten Eingang der Phasenvergleichsstufe 40 zuführt. Die Phase der jeweils durchgeschalteten Schwingung 2.fT wird durch die PLL-Schaltung in eine definierte Lage zum jeweiligen Biphase-Eingangssignal geregelt.

Die beiden Schwingungen 2fT werden auf zwei weitere Frequenzteiler 37,38 mit dem Teilerverhältnis 1 : 2 gegeben. Die Frequenzteiler 37,38 liefern die Taktfrequenzen fT1 für den Demodulator 30 und fT2 für den Demodulator 31.

Außerhalb der Überlappungszeit wird das jeweils ankommende Biphase-Signal und das für den betreffenden Demodulator wirksame Signal 2fT auf die Phasenvergleichsstufe 40 gegeben. Das aus 2fT erzeugte Signal fT ist in der Phase so eingestellt, daß der Demodulator das korrekte NRZ-Signal erzeugt. Zu Beginn jeder neuen Spur werden mit dem anderen Demodulator zwecks Phasenprüfung Demodulationsversuche durchgeführt.

Bei jedem erfolglosen Demodulationsversuch wird von der Demodulatorschaltung 30,31 ein Impuls P abgegeben, der die Phase von FT1, FT2 um 1/8 Periode weiterschiebt. Sobald die richtige Phaseneinstellung gefunden ist, wird über Schalter Sch3 die Bit-Vergleichsschaltung 39 gestartet (B-start).

Bei erfolgreichem Bit-Vergleich kann sofort die gesamte Umschaltung auf das Signal der neuen Spur erfolgen.

Wird keine Bit-Übereinstimmung gefunden, so bestehen folgende Möglichkeiten:

a) Die Bit-Vergleichsschaltung startet über Schalter Sch4 erneut den Phasenangleichvorgang, da zu vermuten ist, daß die Phaseneinstellung nicht optimal ist.

b) Die Bit-Vergleichsschaltung startet sich selbst immer wieder, bis die Bitmuster-Übereinstimmung gefunden ist.

Während der gesamten Zeit bleibt jedoch die Phasenvergleichsschaltung aktiv, so daß bis zum Abschluß des Bitvergleichs jederzeit auch ein neuer Phasenangleichvorgang gestartet werden kann.

In Figur 9 ist Fall b dargestellt. Das Start/Stop-Signal startet mit seiner Vorderflanke, die z. B. von einem von der Servoschaltung gelieferten Kopfeingriffsignal (25 Hz) abgeleitet ist, den Phasenangleichvorgang. Die Rückflanke des Signals schließt den gesamten Signalangleichvorgang ab, sobald der Bitvergleich erfolgreich war oder die Überlappungszeit beendet ist. Auf diese Weise wird mit außerordentlich hoher Sicherheit innerhalb der Überlappungszeit von z. B. 1 ms die bitrichtige Kopfumschaltung erzielt. Sollte z. B. infolge eines langen Dropouts diese Umschaltung nicht möglich sein, wird durch das von der Servoschaltung gelieferte 25 Hz-Signal kurz vor Ende der Überlappungszeit eine Zwangsumschaltung auf das Signal der neuen Spur vorgenommen und gleichzeitig die Rückflanke des Start/Stop-Impulses ausgelöst, so daß auch der Signalangleichvorgang abgeschlossen wird.

Bei der bitrichtigen Kopfumschaltung sind die beiden neuen Eingangssignale für die Phasenvergleichsstufe 40 bereits in die richtige Phasenlage zueinander gebracht. Deshalb wirkt sich diese Umschaltung weder auf den Oszillator 32 noch auf die daran angeschlossenen Teiler 35-38 und 41 aus.

Aus der Frequenz 4.fT des Oszillators 32 werden drei Taktspannungen der Frequenz fT erzeugt. Zwei dieser Taktspannungen (fT1 und fT2) werden jeweils der Signalphase des von den Köpfen K1, K2 kommenden Biphase-Signals angepaßt. Die dritte Taktspannung fT' schwingt ohne Phasensprünge durch. Sie dient dazu, die beiden NRZ-Signale mit gleichem Bittakt in die Schieberegister der Bit-Vergleichsschaltung einzulesen. Dabei wird in erwünschter Weise die Phasenverschiebung zwischen den beiden NRZ-Signalen auf ein ganzzahliges Vielfaches der Bitdauer eingestellt. Für den Bit-Vergleich bestehen dann die gleichen Verhältnisse wie bei Anwendung der Schaltungen gemäß Figur 5 und 13.

Figur 10 zeigt eine Schaltung zur Erzeugung einer Phasenänderung $\Delta\varphi = 1/8$ fT-Periode in den Taktsignalen fT1 und fT2. Die Funktionsweise der Schaltung geht aus den Signalverläufen gemäß Figur 11 hervor.

Das Signal P, dessen Erzeugung z. B. aus Figur 13 hervorgeht, zeigt an, daß eine neue Phasenstufe einzustellen ist. Bei jeder abfallenden Flanke des Signals P wird der Ausgang des Flip-Flops FF1 auf 1 gesetzt (Q1 = 1). Dadurch wird der Ausgang Q2 des Flip-Flop FF2 durch die nächste abfallende Flanke von 4.fT umgeschaltet. Durch diese Umschaltvorgänge entsteht am Ausgang des EX-OR-Gatters G1 der Signalverlauf fZ. Der Schwingungszug 4.fT wird jedesmal umgepolt. Durch die Laufzeit des Flip-Flop FF2 entsteht bei jedem Umpolvorgang eine zusätzliche Halbwelle. Die Schaltung erfüllt auch dann ihren Zweck, wenn die Entstehung einer zusätzlichen Halbwelle durch einen Laufzeitausgleich verhindert wird. Das würde lediglich eine Umkehrung des Vorzeichens der Phasensprünge bedeuten.

Bei jedem Pegelübergang an den Ausgängen des Flip-Flop FF2 erzeugt das Gatter G2 einen Rückstellimpuls für das Flip-Flop FF1, so daß die Schaltung wieder im empfangsbereiten Zustand für den nächsten P-Impuls ist.

Jeder P-Impuls verschiebt also die Schwingung fT1 um genau 1/8 ihrer Periodendauer. Aus den beiden letzten Zeilen von Figur 11 geht hervor, wie sich die Phase von fT1 gegenüber fT' nach zwei P-Impulsen verschoben hat.

Je nach Lage der Taktsignale fT1 bzw. fT2 kann jedes der beiden NRZ-Signale acht verschiedene Phasenlagen gegenüber dem Taktsignal fT' einnehmen, das ohne Phasensprünge durch schwingt.

Figur 12 zeigt, wie die beiden NRZ-Signale in Bezug auf die Bitperiode gleichphasig gemacht werden. Dies geschieht beim Einlesen der Signale in die Schieberegister der Bit-Vergleichsschaltung mit dem gemeinsamen Taktsignal fT'. Da die Pegelübergänge von fT', fT1 und fT2 aus der gemeinsamen Ausgangsschwingung 4fT erzeugt sind, ist das eindeutige Einlesen der NRZ-Signale mit dem gemeinsamen Takt fT' in jedem Fall sichergestellt. Die beiden unteren Zeilen in Figur 12 zeigen die mit der gemeinsamen Taktspannung fT' in zwei D-Flip-Flops eingelesenen Signale NRZ1' und NRZ2'.

Die beiden Signale sind hier gleichzeitig in bitmäßige Übereinstimmung gebracht worden.

Je nach Größe des Überlappungsfehlers können diese Signale jedoch auch um mehrere Bitperioden gegeneinander verschoben sein. Diese Verschiebung zu ermitteln und auszugleichen, ist die Aufgabe der Bit-Vergleichsschaltung.

Die erfindungsgemäße Phasen- und Bittaktangleichung bei mit mehreren Köpfen abgetasteten PCM-Signalen ist nicht auf die Aufzeichnung eines Signals mit unterbrochenen Spuren beschränkt, sondern auch bei einer Parallelspuraufzeichnung anwendbar.

Das beschriebene Verfahren ermöglicht eine PCM-Ton-Aufzeichnung allein oder neben einer Videoaufzeichnung. Im letzteren Falle sind die Bitrate und die PCM-Aufzeichnungsamplitude so zu wählen, daß das Spektrum des PCM-Leitungscodes keine Störungen der FM-Videoaufzeichnung verursacht. Im Gegensatz zu einem bekannten Vorschlag (IEEE Transactions and Consumer Electronics, VOL. CE-28, Nr. 3, August 82, seite 241-249) ist hierbei keine Änderung der Video-Aufzeichnungsnorm erforderlich.

Wenn das PCM-Signal ein Tonsignal ist, das zusammen mit einem Videosignal aufgezeichnet ist, wobei der PCM-Takt mit der Zeilenfrequenz des Videosignals verkoppelt war, dann hat das Ausführungsbeispiel gemäß den Figuren 9-12 den Vorteil, daß die Phasenlage des demodulierten PCM-Signals NRZ1, NRZ2 gegenüber dem Videosignal unverändert bleibt. Bittakt und gegebenenfalls auch Block-Synchronsignal können ohne vorherige Phasenkorrektur für die Videosignalverarbeitung verwendet werden. Die Phasenlage zwischen dem PCM-Takt und dem Videosignal ist dann auch nicht von den Toleranzen verschiedener Laufzeitglieder abhängig.

**Patentansprüche**

1. Verfahren zur Wiedergabe eines Digitalsignals, das in nebeneinanderliegenden Spuren aufgezeichnet ist und mit mindestens zwei umschaltbaren Köpfen derart abgetastet wird, daß sich aufeinanderfolgende Abtastsignale zweier Köpfe zeitlich überlappen, bei welchem Verfahren.

a) die Phase des Abtastsignals (Biphase oder DM) des jeweils die neue Spur im Überlappungsbereich abtastenden Kopfes (K2) vor der Umschaltung durch vorgeschaltete steuerbare Verzögerungsglieder (3,5,7) an die Phase des Bittaktes der vorhergehenden Spur angeglichen wird,

b) nach der Phasenangleichung vor der Umschaltung ein Bitmustervergleich zwischen den zwischengespeicherten Signalen (NRZ 1 und 2) der neuen und der jeweils vorhergehenden Spur vorgenommen und nach Maßgabe dieses Vergleichs eine Position im Zwischenspeicher ausgewählt wird, die die weitere zeitliche Lage der Abtastsignale der neuen Spur bestimmt,

c) zwischen zwei Kopfwechseln die im Zwischenspeicher ausgewählte Position nach Maßgabe (23) der effektiven Bitanzahl/Spur und der getroffenen Auswahl im Zwischenspeicher in eine Grundstellung gebracht wird, wobei gleichzeitig die Anzahl der Bittakte (fr) erhöht oder verringert wird (24).

2. Verfahren zur Wiedergabe eines Digitalsignals, das in nebeneinanderliegenden Spuren aufgezeichnet ist und mit mindestens zwei umschaltbaren Köpfen derart abgetastet wird, daß sich aufeinanderfolgende Abtastsignale zweier Köpfe zeitlich überlappen, bei welchem Verfahren

a) im Überlappungsbereich dem Demodulator (31) des Abtastsignals (Biphase) der neuen Spur (K2) ein vom Abtastsignal der jeweils vorhergehenden Spur (K1) gesteuerter Takt ($f_{T2}$) zugeführt wird, der vor der Umschaltung in seiner Phase mittels einer zwischengeschalteten steuerbaren Phasenschaltung (34) der Phase des Abtastsignals der neuen Spur angeglichen wird,

b) nach der Phasenangleichung vor der Umschaltung ein Bitmustervergleich zwischen den zwischengespeicherten Signalen (NRZ 1 und 2) der neuen und der jeweils vorhergehenden Spur vorgenommen und nach Maßgabe dieses Vergleichs eine Position im Zwischenspeicher ausgewählt wird, die die weitere zeitliche Lage der Abtastsignale der neuen Spur bestimmt,

c) zwischen zwei Kopfwechseln die im Zwischenspeicher ausgewählte Position nach Maßgabe (23) der effektiven Bitanzahl/Spur und der getroffenen Auswahl im Zwischenspeicher in eine Grundstellung gebracht wird, wobei gleichzeitig die Anzahl der Bittakte (fr) erhöht oder verringert wird (24).

3. Verfahren nach Anspruch 1 oder 2, wobei die Phasenangleichung stufenweise erfolgt.

4. Verfahren nach Anspruch 3, wobei die Stufengröße T/8 beträgt, wobei T die Dauer einer Bitperiode des Digitalsignals ist.

5. Verfahren nach Anspruch 4, wobei für die Durchführung der Phasenangleichung vier Einstellstufen im Abstand T/8 und eine zusätzliche Einstellmöglichkeit für die Verschiebung um T/2 vorgesehen sind.

6. Verfahren nach einem oder mehreren der vorhergehenden Ansprüche, wobei die Phasenangleichung der Bittakte gleichbedeutend ist mit der zwecks fehlerfreier Demodulation des Digitalsignals erforderlichen Phaseneinstellung zwischen dem in einem Leitungscode (Biphase, DM) ankommenden Digitalsignal und einer örtlich erzeugten Taktschwingung.

7. Verfahren nach einem oder mehreren der vorhergehenden Ansprüche, wobei als Kriterium für die korrekte Phaseneinstellung die fehlerfreie Arbeitsweise der Demodulatorschaltung über eine vorgegebene Anzahl von Bittakten oder Pegelübergängen der Datensignale dient.

8. Verfahren nach einem oder mehreren der vorhergehenden Ansprüche, wobei nach Feststellung der korrekten Phasengleichung ein Startsignal für die Angleichung der Bitmuster (B-Start) abgegeben wird.

9. Verfahren nach einem oder mehreren der vorhergehenden Ansprüche, wobei zur Angleichung der Bitmuster die demodulierten Signale (NRZ1, NRZ2) mit einer gemeinsamen Taktschwingung (fT') eingelesen werden.

10. Verfahren nach Anspruch 9, wobei durch Vergleich der Signale an den Abgriffen des Schieberegisters (16) für die neue Spur mit dem ausgewerteten Signal der alten Spur der für die Umschaltung auf die neue Spur zu verwendende Abgriff ausgewählt wird.

11. Verfahren nach einem oder mehreren der Ansprüche 8-10, wobei mit dem Startsignal für die Angleichung der Bitmuster die Phasenangleichung beendet wird und, sofern keine Bitmusterübereinstimmung gefunden wird, die Phasenangleichung neu gestartet wird.

12. Verfahren nach einem oder mehreren der Ansprüche 8-10, <u>dadurch gekennzeichnet,</u> daß die Schaltung für die Phasenangleichung bis zum Abschluß der Angleichung der Bitmuster aktiv bleibt.

13. Verfahren nach Anspruch 1 oder 2 wobei mit einer Schaltung (21,21.1) der jeweilige Überlappungsfehler ermittelt wird und in einem Speicher (22,22.1) die Adresse für den Schieberegisterabgriff abgelegt ist, der einzustellen ist, damit beim nächsten Kopfwechsel das Signal der neuen Spur von einem eingeschränkten Abgriffsbereich des ihm zugeordneten Schieberegisters (16) abgenommen wird.

14. Verfahren nach Anspruch 13, wobei zwischen zwei Kofwechseln das ausgewertete Signal schrittweise auf den Schieberegisterabgriff eingestellt wird, der der im Speicher (22,22.1) abgelegten Adresse entspricht.

15. Verfahren nach Anspruch 14, wobei jeder Einstellschritt aus dem Übergang auf einen benachbarten Schieberegisterabgriff besteht, wobei gleichzeitig eine einmalige Verdoppelung oder Halbierung der Bitrate des NRZ-Signals und der Taktfrequenz (fT) erfolgt (Fig. 8).

16. Verfahren nach Anspruch 15, wobei in einem Datenblock des NRZ-Signale nicht mehr als ein Einstellschritt vorgenommen wird.

17. Verfahren nach Anspruch 2, wobei ein VCO-Oszillator in einer PLL-Schaltung zur Regenerierung des PCM-Taktes auf einem ganzzahligen Vielfachen der Bitrate schwingt.

20. Verfahren nach einem oder mehreren der vorhergehenden Ansprüche, wobei ein Frequenzteiler, über den Schwingung des VCO-Oszillators auf die Phasenvergleichsstufe der PLL-Schaltung zurückgeführt wird, doppelt vorhanden ist.

19. Verfahren nach Anspruch 18, wobei der erste Frequenzteiler die Schwingung für die Phasenvergleichsstufe der PLL-Schaltung und den Takt für die Demodulation des in einem Leitungsdecoder von einem der Köpfe kommenden PCM-Signals liefert.

20. Verfahren nach Anspruch 18, wobei bei Beginn einer neuen Spur innerhalb der Überlappungszeit beider Spuren die Phase der Ausgangsspannung des zweiten Frequenzteilers durch Beeinflussung seiner Zählweise solange geändert wird, bis die korrekte Demodulation des Digitalsignals der neuen Spur mit der Ausgangsspannung dieses Frequenzteilers ermöglicht ist.

21. Verfahren nach Anspruch 20, wobei nach der genannten Phasenänderung die gleichzeitige Umschaltung beider Eingänge der Phasenvergleichsstufe auf das Signal der neuen Spur und den für dieses Signal phaseneingestellten Ausgang des Frequenzteilers erfolgt.

**Revendications**

1. Procédé de lecture d'un signal numérique, qui est enregistré sur des pistes disposées côte-à-côte et est exploré par du moins deux têtes commutables, de telle sorte que des signaux successifs d'exploration fournis par les deux têtes se chevauchent dans le temps, et selon lequel

a) la phase du signal d'exploration (biphase ou DM) de la tête (K2) explorant respectivement la nouvelle piste dans la zone de chevauchement est asservie, avant la commutation, à la phase de cadence binaire de la piste précédente, au moyen de circuits commandables de retard (3,5,7) branchés en amont,

b) après l'asservissement de phase et avant la commutation, une comparaison des profils binaires entre les signaux mémorisés temporairement (NRZ 1 et 2) de la nouvelle piste et de la piste respectivement précédente est exécutée et une position, qui détermine la positionn temporelle ultérieure des signaux d'exploration de la nouvelle piste, est sélectionnée dans la mémoire intermédiaire en fonction de cette comparaison,

c) entre deux commutations des têtes, la position sélectionnée dans la mémoire intermédiaire est réglée dans une position de base en fonction (23) du nombre effectif de bits/ de la piste effective et de la sélection réalisée dans la mémoire intermédiaire, auquel cas le nombre des impulsions de cadence binaire (fr) est simultanément accru ou réduit (24).

2. Procédé de lecture d'un signal numérique, qui est enregistré sur des pistes disposées côte-à-côte et est exploré par au moins deux têtes commutables, de telle sorte que des signaux successifs d'exploration fournis par les deux têtes se chevauchent dans le temps, et selon lequel

a) dans la zone de chevauchement, au démodulateur (31) du signal d'exploration (biphase) de la nouvelle piste (K2) est envoyée une cadence ($f_{T2}$) qui est commandée par le signal d'exploration de la piste respectivement précédente (K1) et dont la phase est asservie, avant la commutation, à la phase du signal d'exploration de la nouvelle piste, au moyen d'un circuit commandable de réglage de phase (34), intercalé,

b) après l'asservissement de phase et avant la commutation, une comparaison des profils binaires entre les signaux mémorisés temporairement (NRZ 1 et 2) de la nouvelle piste et de la piste respectivement précédente est exécutée et une position, qui détermine la position temporelle ultérieure des signaux d'exploration de la nouvelle piste, est sélectionnée dans la mémoire intermédiaire en fonction de cette comparaison,

c) entre deux commutations des têtes, la position sélectionnée dans la mémoire intermédiaire est réglée dans une position de base en fonction (23) du nombre effectif de bits/de la piste effective et de la sélection réalisée dans la mémoire intermédiaire, auquel cas le nombre des impulsions de cadence binaire (fr) est simultanément accru ou réduit (24).

3. Procédé selon la revendication 1 ou 2, selon lequel l'asservissement de phase s'effectue par échelons.

4. Procédé selon la revendication 3, selon lequel la taille des échelons est égale à T/8, T représentant la durée d'une période binaire du signal numérique.

5. Procédé selon la revendication 4, selon lequel pour l'exécution de l'asservissement de phase, il est prévu quatre échelons de réglage à des intervalles T/8 et une possibilité supplémentaire de réglage pour le décalage égal à T/2.

6. Procédé selon une ou plusieurs des revendications précédentes, selon lequel l'asservissement de phase des cadences binaires est équivalent au réglage de phase, qui est nécessaire en vue de la démodulation sans erreur du signal numérique, entre le signal numérique arrivant avec un code de ligne (biphase, DM) et une oscillation de cadence produite localement.

7. Procédé selon une ou plusieurs des revendications précédentes, selon lequel on utilise, en tant que critère pour le réglage correct de la phase, le mode de fonctionnement sans erreur du circuit démodulateur pendant un nombre prédéterminé d'impulsions de cadence binaire ou de transitions de niveau des signaux de données.

8. Procédé selon une ou plusieurs des revendications précédentes, selon lequel après détermination de l'asservissement correct de phase, un signal de démarrage est délivré pour l'asservissement des profils binaires (démarrage B).

9. Procédé selon une ou plusieurs des revendications précédentes, selon lequel pour l'asservissement des profils binaires, les signaux démodulés (NRZ1, NRZ2) sont introduits avec une oscillation de cadence commune (fT').

10. Procédé selon la revendication 9, selon lequel la prise devant être utilisée pour la commutation sur la nouvelle piste est sélectionnée par comparaison des signaux présents sur les prises du registre à décalage (16) prévu pour la nouvelle piste au signal évalué de l'ancienne piste.

11. Procédé selon l'une ou plusieurs des revendications 8-10, selon lequel l'asservissement de phase est terminé avec le signal de démarrage pour l'asservissement des profils binaires et, dans la mesure où aucune coïncidence entre les profils binaires n'est trouvée, l'asservissement de phase est à nouveau déclenché.

12. Procédé selon une ou plusieurs des revendications 8-10, selon lequel le circuit servant à réaliser l'asservissement de phase reste actif jusqu'à la fin de l'asservissement des profils binaires.

13. Procédé selon la revendication 1 ou 2, selon lequel l'erreur respective de chevauchement est déterminée au moyen d'un circuit (21, 21.1) et l'adresse de la prise du registre à décalage, qui doit être réglée afin que, lors de la commutation immédiatement suivante des têtes, le signal de la nouvelle piste soit prélevé d'une zone limitée de prélèvement du registre à décalage (16) qui lui est associé, est mémorisée dans une mémoire (22, 22.1).

14. Procédé selon la revendication 13, selon lequel entre deux commutations entre les têtes, le signal évalué est réglé pas-à-pas sur la prise du registre à décalage, qui correspond à l'adresse mémorisée dans la mémoire 22, 22.1).

15. Procédé selon la revendication 14, selon lequel chaque pas de réglage est constitué par la transition aboutissant à une prise voisine du registre à décalage, auquel cas un doublement unique ou une division unique par deux, à la cadence binaire du signal NRZ et de la fréquence d'horloge (fA) est réalisée simultanément (figure 8).

16. Procédé selon la revendication 15, selon lequel pas plus d'un pas de réglage est exécuté dans un bloc de données du signal NRZ.

17. Procédé selon la revendication 2, selon lequel un oscillateur VCO situé dans un circuit PLL en vue de réaliser la régénération de la cadence MIC oscille avec une fréquence égale à un multiple entier de la cadence binaire.

18. Procédé selon une ou plusieurs des revendications précédentes, selon lequel un diviseur de fréquence, au moyen duquel l'oscillation de l'oscillateur VCO est renvoyée à l'étage de comparaison de phase du circuit PLL, est prévu en double.

19. Procédé selon la revendication 18, selon lequel le premier diviseur de fréquence délivre l'oscillation pour l'étage de comparaison de phase du circuit PLL et la cadence pour la démodulation du signal MIC arrivant dans un décodeur de ligne de l'une des têtes.

20. Procédé selon la revendication 16, selon lequel au début d'une nouvelle piste et dans les limites de chevauchement des deux pistes, la phase de la tension de sortie du second diviseur de fréquence est modifiée, au moyen d'une action appliquée à son mode de comptage, jusqu'à ce que la démodulation correcte du signal numérique de la nouvelle piste avec la tension de sortie de ce diviseur de fréquence soit possible.

21. Procédé selon la revendication 20, selon lequel la commutation simultanée de deux entrées de l'étage comparateur de phase sur le signal de la nouvelle piste et sur la sortie du diviseur de fréquence, dont la phase est réglée pour ce signal, intervient après ladite modification de la phase.

# Claims

1. A method of reproducing a digital signal, which is recorded in adjoining tracks and is scanned by at least two switchable heads such that successive scanning signals of two heads overlap in terms of time, in which method

a) the phase of the scanning signal (biphase or DM) of the head (K2), scanning the overlapping area of the new track respectively, is adjusted to the phase of the bit clock pulse of the preceding track before the switchover by preconnected controllable delay elements (3,5,7)

b) after the phase adjustment before switchover, a bit pattern comparison is undertaken between the intermediately stored signals (NRZ 1 and 2) of the new track and the respectively preceding track and, as determined by this comparison, a position in the intermediate store is selected which determines the further timing position of scanning signals of the new track,

c) between two changes of head, the position selected in the intermediate store is brought into a basic position, as determined (23) by the effective bit number/track and the sellection made in the intermediate store, the number of bit clock pulses (fr) being increased or reduced (24) at the same time.

2. A method of reproducing a digital signal, which is recorded in adjoining tracks and is scanned by at least two switchable heads such that successive scanning signals of two heads overlap in terms of time, in which method

a) in the overlapping area a clock pulse ($f_{T2}$) controlled by the scanning signal of the respectively preceding track (K1) is supplied to the demodulator (31) of the scanning signal (biphase) of the new track (K2), said clock pulse ($f_{T2}$) being adjusted to the phase of the scanning signal of the new track before the switchover in its phase with the aid of an intermediately connected controllable phase circuit (34)

b) after the phase adjustment before switchover, a bit pattern comparison is undertaken between the intermediately stored signals (NRZ 1 and 2) of the new track and the respectively preceding track and, as determined by this comparison, a position in the intermediate store is selected which determines the further timing position of the scanning signals of the new track,

c) between two changes of head, the position selected in the intermediate store is brought into a basic position, as determined (23) by the effective bit number/track and the selection made in the intermediate store, the number of bit clock pulses (fr) being increased or reduced (24) at the same time.

3. A method according to claim 1 or 2, in which the phase adjustment is in steps.

4. A method according to claim 3, in which the size of the steps is T/8, T being the duration of a bit period of the digital signal.

5. A method according to claim 4, in which four step settings for implementing the phase adjustment are provided at a spacing of T/8 and there is provided an opportunity for an additional setting for displacement by T/2.

6. A method according to one or more of the preceding claims, in which the phase adjustment of the bit clock pulses is synonymous with the phase setting required for the purpose of fault-free demodulation of the digital signal between the digital signal arriving in a line code (biphase, DM) and a locally produced clock pulse oscillation.

7. A method according to one or more of the preceding claims, in which the fault-free operation of the demodulator circuit serves as a criterion for the correct phase setting by means of a preset number of bit clock pulses or level transitions of the data signals.

8. A method according to one or more of the preceding claims, in which after establishing the correct phase adjustment a start signal is emitted for adjusting the bit patterns (B-start).

9. A method according to one or more of the preceding claims, in which the demodulated signals (NRZ1, NRZ2) are read in with a common clock pulse oscillation (fT') for the adjustment of the bit patterns.

10. A method according to claim 9, in which by comparing the signals at the tapping points of the shift register (16) for the new track with the evaluated signal of the old track, the tapping point to be used for switchover to the new track is selected.

11. A method according to one or more of claims 8-10, in which the phase adjustment is terminated with the star signal for adjustment of the bit patterns and as long as a bit pattern coincidence is not found the phase adjustment is restarted.

12. A method according to one or more of claims 8-10, <u>characterised in that</u> the circuit for the phase adjustment remains active until adjustment of the bit patterns is completed.

13. A method according to claim 1 or 2, in which the respective overlap error is determined by a circuit (21,21.1) and the address for the shift register tapping point, which is to be set, is deposited in a store (22,22.1), so that during the next head change the signal of the new track is taken from a restricted tapping area of its associated shift register (16).

14. A method according to claim 13, in which between two head changes the evaluated signal is set in steps on to the shift register tapping point, said tapping point corresponding to the address deposited in the store (22,22.1).

15. A method according to claim 14, in which each setting step consists of the transition to an adjoining shift register, in which a once only doubling or halving of the bit rate of the NRZ signal and of the clock frequency (fT) is effected at the same time (Fig. 8).

16. A method according to claim 15, in which not more than one setting step is undertaken in a data block of the NRZ signal.

17. A method according to claim 2, in which a VCO oscillator oscillates in a PLL circuit for regenerating the PCM clock pulse on a whole number multiple of the bit rate.

18. A method according to one or more of the preceding claims in which a frequency splitter, by means of which the oscillation of the VCO oscillator is guided back to the phase comparison stage of the PLL circuit, is present in duplicate.

19. A method according to claim 18, in which the first frequency splitter delivers the oscillation for the phase comparison stage of the PLL circuit and the clock pulse for the demodulation of the PCM signal in one line decoder coming from one of the heads.

20. A method according to claim 18, in which at the beginning of a new track within the overlap time of both tracks the phase of the output voltage of the second frequency splitter is changed by influencing its counting method until the correct demodulation of the digital signal of the new track is made possible with the output voltage of this frequency splitter.

21. A method according to claim 20, in which after the said phase change, both inputs of the phase comparison stage switch over at the same time to the signal of the new track and to the output of the frequency splitter, which is phase set for this signal.

Fig.1

$V_K$

K2

$V_B$

K1

Aufzeichnung  S1  S2  Wiedergabe

K1

a.

K2

Fig.2

K1

b.

K2

$\Delta t$

K1

c.

K2

$\Delta t$

Fig.6

50Hz (z.Servo)

K1

K2

S1,X

S2,X

S3

V/R-Zähler   A = C   Ausgleich   A = B   A = C

1

K1  K2       Servo  K1  K2

FM-
Mod.

A   W

FM-
Demod

Teiler

Imp.
Abtr.

PCM-
Coder
u.
Zeit-Komp

NRZ

$+$

Imp.
Abtr.

NRZ

PCM-
Decoder
u.
Zeit-Exp.

NF

NF

$f_T$    V    S       S    V  $f_T$ $f_{T-}$

## Fig.3

K1  K2       Servo       K1  K2

Biphase
od. DM

Mod.

Biphase
od. DM

Demod.

$2f_{T-}$

PCM-
Coder

NRZ

NRZ

$f_T$

PCM-
Decoder

NF

NF

Teiler

$f_{T-}$

$f_{T-}$

$2f_{T-}$

## Fig.4

Fig. 5

0 114 344

Fig 7

Fig. 8

Fig. 5.1

9

Fig. 9

0 114 344

Fig.10

Fig.11

Fig.12

13

Fig.13

Fig.14